# EUROPEAN PATENT APPLICATION

(11) **EP 4 223 896 A2**
(43) Date of publication of application: **09.08.2023**
(21) Application number: 23165224.9
(22) Date of filing: 25.03.2020
(51) Int. Cl.: C22B 3/06, B09B 3/00, C22B 3/26, C22B 7/00, C22B 15/00, C22B 21/00, C22B 47/00, H01M 10/54, C22B 3/30, C22B 3/38, C22B 3/40, C22B 26/12

(54) **METHOD FOR PROCESSING LITHIUM ION BATTERY SCRAP**

(30) Priority: 29.03.2019 JP 2019069379
(62) Divisional of application: 20782825.2
(71) Applicant: JX Nippon Mining & Metals Corporation, Tokyo 105-8417 (JP)
(72) Inventor: ARAKAWA, Junichi, Tsuruga-shi, Fukui, 914-0027 (JP); HAGA, Yasufumi, Tsuruga-shi, Fukui, 914-0027 (JP)
(74) Representative: Arnold & Siedsma

(57) **Abstract**

A method for processing lithium ion battery scrap includes: a leaching step of leaching lithium ion battery scrap in an acid to obtain a leached solution containing at least fluoride ions and aluminum ions; a neutralization step of neutralizing the leached solution in a pH range of from 5.3 to 5.5 to remove at least a part of the aluminum ions from the leached solution to obtain a neutralized solution; and an extraction step of extracting the remaining of the aluminum ions from the neutralized solution by subjecting the extracted solution to solvent extraction.

## Description

### FIELD OF THE INVENTION

This specification discloses an art relating to a method for processing lithium ion battery scrap.

### BACKGROUND OF THE INVENTION

In recent years, it has been widely studied for recovery of valuable metals such as cobalt and nickel from lithium ion battery scrap discarded for expired product life, manufacturing defects or other reasons by means of a wet process or the like, in terms of effective utilization of resources.

For example, in order to recover valuable metals from lithium ion battery scrap, battery powder and the like obtained through a roasting step and other steps is added to an acid to be leached, resulting in a leached solution in which lithium, nickel, cobalt, manganese, iron, copper, aluminum and the like are dissolved.

Subsequently, iron, copper, aluminum and the like are sequentially or simultaneously removed from various elements dissolved in the leached solution by solvent extraction or neutralization at a plurality of stages, and valuable metals such as nickel, cobalt, manganese and lithium are separated and concentrated by solvent extraction to obtain a solution in which each metal is dissolved. Nickel and cobalt are recovered from each solution by electrolysis or the like (see, for example, Patent Literatures 1 to 3).

### CITATION LIST

### Patent Literatures

[Patent Literature 1] Japanese Patent Application Publication No. 2010-180439 A
[Patent Literature 2] U.S. Patent Application Publication No. 2011/0135547 A1
[Patent Literature 3] Japanese Patent No. 5706457 B

### SUMMARY OF THE INVENTION

### Technical Problem

If the leached solution contains aluminum ions, it would be effective to perform a neutralization step of neutralizing the leached solution to remove at least a part of the aluminum ions, followed by an extraction step of extracting and removing the remaining of the aluminum ions from a neutralized solution obtained in the neutralization step by solvent extraction.

Here, it is found that if the leached solution contains fluoride ions and the neutralized solution contains a relatively large amount of aluminum ions after the neutralization step, there is a problem that a compound of fluorine with aluminum will be deposited when the neutralized solution is subjected to solvent extraction, which will cause clogging of pipelines.

This specification discloses a method for processing lithium ion battery scrap that can effectively remove aluminum ions from the leached solution containing fluoride ions and aluminum ions.

### Solution to Problem

A method for processing lithium ion battery scrap disclosed in this specification comprises: a leaching step of leaching lithium ion battery scrap in an acid to obtain a leached solution containing at least fluoride ions and aluminum ions; a neutralization step of neutralizing the leached solution in a pH range of from 5.3 to 5.5 to remove at least a part of the aluminum ions from the leached solution to obtain a neutralized solution; and an extraction step of extracting the remaining of the aluminum ions from the neutralized solution by subjecting the extracted solution to solvent extraction.

### Advantageous Effects of Invention

According to the method for processing lithium ion battery scrap as described above, the aluminum ions can be effectively removed from the leached solution containing the fluoride ions and the aluminum ions.

### BRIEF DESCRIPTION OF THE DRAWINGS

FIG. 1 is a flowchart showing a method for processing lithium ion battery scrap according to one embodiment; and
FIG. 2 is a graph showing a relationship between pH and Al concentration due to neutralization in Example.

### DETAILED DESCRIPTION OF THE INVENTION

Hereinafter, embodiments of the invention disclosed herein will be described in detail.

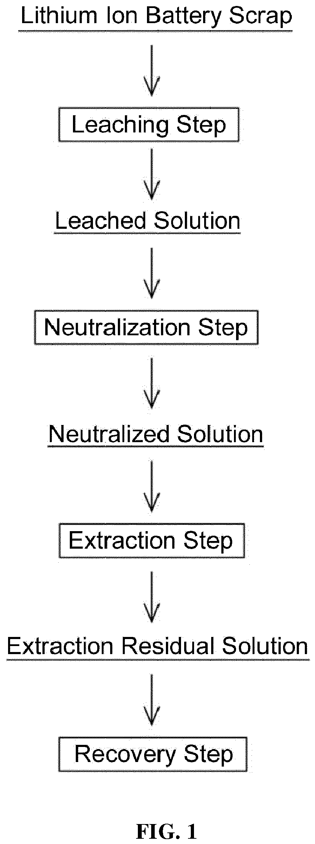

As illustrated in FIG. 1, a method for processing lithium ion battery scrap according to an embodiment includes: a leaching step of leaching lithium ion battery scrap in an acid to obtain a leached solution containing at least fluoride ions and aluminum ions; a neutralization step of neutralizing the leached solution in a pH range of from 5.3 to 5.5 to remove at least a part of the aluminum ions from the leached solution to obtain a neutralized solution; and an extraction step of extracting the remaining of the aluminum ions from the neutralized solution by subjecting the extracted solution to solvent extraction.

### (Lithium Ion Battery Scrap)

Lithium ion battery scrap that can be used herein may be lithium ion batteries (lithium ion secondary batteries) that can be used in various electronic devices such as mobile phones, which have been discarded due to lapses of lifetimes of battery products, manufacturing defects or other reasons. The recovery of cobalt, nickel and the like, valuable metals, from such lithium ion battery scrap, is preferable in terms of effective utilization of resources.

The lithium ion battery scrap that can be used may include so-called battery refuse, a mixture of the battery refuse and positive electrode materials with aluminum foils or positive electrode active materials, and materials obtained by roasting, chemically treating, crashing and/or sieving the battery refuse as required, and so on.

The battery refuse may include, in addition to the positive electrode active materials which are lithium metal salts containing manganese, nickel and cobalt, negative electrode materials containing carbon, iron and copper, and aluminum foils deposited to the positive electrode active materials, and aluminum housings of the lithium ion batteries. More particularly, the lithium ion battery may contain a single metal oxide composed of one element of lithium, nickel, cobalt and manganese forming the positive electrode active material, and/or a composite metal oxide composed of two or more elements, as well as aluminum, copper, iron, carbon and the like.

In the present embodiment it is particularly effective to use lithium ion battery scrap containing, for example, from 0.5% by mass to 15% by mass of aluminum. Also, the lithium ion battery scrap may contain, for example, from 0.5% by mass to 10% bay mass of iron.

### (Leaching Step)

In the leaching step, for example, the above lithium ion battery scrap obtained through crashing/sieving is added to a leaching solution such as a sulfuric acid solution to leach the scrap. This step provides a leached solution in which certain metals contained in the lithium ion battery scrap has been leached.

Here, copper that may be contained in the lithium ion battery scrap is preferably left as a solid while maintaining a low leaching rate, until the end of leaching. This can be achieved by allowing an aluminum solid that is base more than copper to be present in the leached solution, such as by being originally contained in the lithium ion battery scrap and/or by being separately added to the leached solution. The remaining copper as a solid can be effectively removed together with other metals, for example, during solid-liquid separation in a neutralization step as described below.

In the leaching step, the pH of the leaching solution may be from 0 to 2.0. If the pH is too high, then sufficient leaching velocities of cobalt and nickel may not be achieved. On the other hand, if the pH is too low, the leaching will rapidly proceed, copper will be leached out, and costs may be increased due to pH adjustment if there is a need for increasing the pH in the subsequent step.

In the leaching step, the leaching time from the time when the lithium ion battery scrap is added to the acidic solution to the end of the leaching may be from 0.5 hours to 10 hours. If the reaction time is too short, cobalt or nickel desired to be dissolved may not be sufficiently dissolved. On the other hand, if the leaching time is too long, the dissolution of the aluminum solid may be terminated and the dissolution of copper may begin. A more preferable range of the leaching time may be from 1 hour to 5 hours, and more preferably from 1 hour to 3 hours.

It is to understand that the leached solution contains at least fluoride ions and aluminum ions. The fluoride ions may be contained, for example, from battery binders or electrolytes, and the aluminum ions may be contained by dissolving aluminum foils or aluminum housings in the leaching solution, or the like. The concentration of the fluoride ions in the leached solution is, for example, from 10 mg/L to 2000 mg/L, typically from 50 mg/L to 1000 mg/L. The concentration of aluminum ions in the leached solution is, for example, from 100 mg/L to 10000 mg/L, typically from 3000 mg/L to 8000 mg/L.

### (Neutralization Step)

In the neutralization step, the aluminum ions in the leached solution obtained in the above leaching step is deposited and precipitated by increasing the pH of the leached solution to neutralize the leached solution, and the aluminum is removed by subsequent solid-liquid separation to obtain a neutralized solution.

During the neutralization in the neutralization step, it is important to increase the pH of the leached solution in the range of from 5.3 to 5.5. This can remove a large amount of aluminum ions and effectively avoid pipeline clogging problems due to the precipitation of compounds of fluorine with aluminum in the subsequent extraction step. In other words, if the pH of the leached solution is not set in that range during the neutralization, a large amount of aluminum hydroxide, such as sodium hexafluoroaluminate (Na₃AlF₆), will be precipitated in the extraction step as a result of the relatively large amount of aluminum ions remaining in the neutralized solution, which will cause clogging of the pipelines. More specifically, if the pH is less than 5.3, the precipitation of Al will be insufficient, and on the other hand, if the pH is higher than 5.5, Co will be lost.

In the aluminum removal step, an alkali such as sodium hydroxide, sodium carbonate and ammonia can be added to the leached solution in order to increase the pH to the above range.

During the neutralization in the neutralization step, the leached solution may preferably have an ORP value (ORP vs Ag/AgCl) of from -500 mV to 100 mV, and more preferably from - 400 mV to 0 mV. If the ORP value at this time is too high, cobalt may be precipitated as tricobalt tetraoxide (Co₃O₄). On the other hand, if the ORP value is too low, cobalt may be reduced to an elementary metal (Co metal) which will be precipitated.

Further, during the neutralization in the neutralization step, the leached solution may preferably have a temperature of from 50 °C to 90 °C. If the temperature of the leached solution is less than 50 °C, reactivity may be deteriorated, and if it is higher than 90 °C, a device that can withstand the elevated temperature will be required, as well as it is not preferable in terms of safety.

After sufficiently precipitating aluminum by neutralization, solid-liquid separation is carried out using a known apparatus and method such as a filter press and thickener to mainly remove the precipitated aluminum.

In this case, it may also be possible to separate copper left as a solid without being dissolved in the leaching step, and carbon that may be contained in the lithium ion battery scrap. Further, when filtering a precipitate of only aluminum, the aluminum precipitate in the form of gel is difficult to be filtered, resulting in a decrease in a filtration rate. However, in the solid-liquid separation after neutralization, the precipitate contains not only aluminum but also copper, carbon and the like, so that the copper, carbon and the like can compensate for the difficulty of filtration of the aluminum precipitate in the form of gel, and a time required for filtration can be shortened.

When the leached solution obtained in the leaching step as described above contains lithium ions and a molar ratio of lithium to aluminum in the leached solution (Li/Al ratio) is 1.1 or more, the aluminum contained in the precipitate after neutralization will produce composite oxides or composite hydroxides, such as gelatinous Al(OH)₃ as well as crystalline LiAlO₂ and LiAl₂(OH)₇, and will bring about a form close to a powder form. In this case, it is possible to further shorten the filtration time.

By the way, when the leached solution contains the iron ions, it is preferable that, prior to the above neutralization, an oxidizing agent is added to the leached solution to adjust a pH in a range of from 3.0 to 5.0 to deposit and precipitate the iron ions from the leached solution, and the iron is then removed by subsequent solid-liquid separation.

The iron ions in the leached solution are oxidized from divalent iron to trivalent iron by adding such an oxidizing agent, and the trivalent iron is precipitated as an oxide (hydroxide) at a lower pH than the divalent iron. Therefore, iron can be precipitated by adjusting the leached solution to the relatively low pH as described above. In many cases, iron is precipitated as a solid such as iron hydroxide (Fe(OH)₃).

Here, if the pH is greatly increased, precipitation of cobalt will occur, but during the oxidation, iron can be precipitated without increasing the pH so much, so that precipitation of cobalt at this time can be effectively suppressed.

During the oxidation, if the pH is too low, iron cannot be sufficiently precipitated, whereas if the pH is too high, other metals such as cobalt will also be precipitated. From this viewpoint, the pH of the leached solution during the oxidation is more preferably from 3.0 to 4.0, and even more preferably from 3.0 to 3.5. To adjust the pH, an acid such as sulfuric acid, hydrochloric acid, and nitric acid can be added to the leached solution prior to the addition of the oxidizing agent.

Further, during the oxidation, the leached solution has an oxidation-reduction potential (ORP vs Ag/AgCl), i.e., an ORP value, of from 300 mV to 900 mV, and more preferably from 500 mV to 700 mV. If the ORP value at this time is too low, iron may not be oxidized. On the other hand, if the ORP value is too high, cobalt may be oxidized and precipitated as an oxide.

The oxidizing agent added during the oxidation is not particularly limited as long as it can oxidize iron. Preferable oxidizing agent includes manganese dioxide, positive electrode active materials and/or manganese-containing leached residues obtained by leaching the positive electrode active materials. These materials can effectively oxidize iron in the leached solution. It should be noted that manganese dioxide may be contained in the manganese-containing leached residues obtained by leaching the positive electrode active materials with an acid or the like. When using the above positive electrode active material or the like as the oxidizing agent, a precipitation reaction occurs in which manganese dissolved in the leached solution is converted to manganese dioxide. Therefore, the precipitated manganese can be removed together with iron.

After adding the oxidizing agent, an alkali such as sodium hydroxide, sodium carbonate and ammonia can be added to adjust the pH within the predetermined range.

In the above neutralization in the neutralization step, the concentration of aluminum ions in the neutralized solution is preferably 100 mg/L or less, and more preferably 50 mg/L or less. This can effectively suppress the precipitation of compounds of aluminum with fluorine in the extraction step. The fluoride ion concentration in the neutralized solution obtained through the neutralization step may be, for example, from 10 mg/L to 500 mg/L, typically from 10 mg/L to 100 mg/L, and the sodium ion concentration may be, for example, from 10,000 mg/L to 30,000 mg/L, typically 15,000 mg/L to 25,000 mg/L.

### (Extraction Step)

After the neutralization step, the extraction process is carried out to extract the remaining aluminum ions from the neutralized solution by solvent extraction. If the neutralized solution contains at least one of the manganese ion and the copper ion, the extraction step can extract not only the aluminum ions but also the manganese ions and/or coppers. The extraction step results in an extraction residual solution in which the aluminum ions, and the like have been removed.

As described above, the aluminum ions contained in the neutralized solution are sufficiently reduced by neutralizing the pH of the leached solution in the defined range in the neutralization step. Therefore, the extraction step generates less precipitate containing aluminum hydroxide such as sodium hexafluoroaluminate (Na₃AlF₆), which will be able to prevent the pipelines from being clogged by the precipitate.

Specifically, here, the extraction residual solution can be subjected to solvent extraction using a mixed extracting agent containing a phosphate ester-based extracting agent and an oxime-based extracting agent. In particular, the use of the phosphate ester-based extracting agent in combination with the oxime-based extracting agent can significantly improve a separation efficiency of aluminum ions, copper ions or the like. Among them, most of copper can be extracted.

Here, examples of the phosphate ester-based extracting agent include di-2-ethylhexylphosphoric acid (trade name: D2EHPA or DP8R). The oxime-based extracting agent is preferably aldoxime or based on aldoxime. Specific examples include 2-hydroxy-5-nonylacetophenone oxime (trade name: LIX 84), 5-dodecylsalicylaldoxime (trade name: LIX 860), a mixture of LIX 84 and LIX 860 (trade name: LIX984), 5-nonylsalicylaldoxime (trade name: ACORGAM 5640) and the like, among which 5-nonylsalicylaldoxime is preferable in terms of price and the like.

In the solvent extraction in the extraction step, the pH is preferably from 2.5 to 4.0, and more preferably from 2.8 to 3.3.

### (Recovery Step)

The extraction residual solution obtained in the extraction step can be subjected to a recovery step of recovering cobalt and/or nickel from the solution, and optionally, further recovering lithium.

More particularly, the cobalt is first recovered, where the extraction residual solution in the extraction step as described above is subjected to solvent extraction, preferably using the phosphonate ester-based extracting agent to extract cobalt ions into the solvent. A preferable phosphonate ester-based extracting agent is 2-ethylhexyl phosphonate (trade name: PC-88A, Ionquest 801) in terms of the separation efficiencies of nickel ions and cobalt ions.

In the recovery of cobalt, the pH is preferably from 4.5 to 5.5, and more preferably from 4.8 to 5.2.

The extracting agent containing the cobalt ions after solvent extraction (organic phase) can be subjected to back extraction. The Co that has moved to the aqueous phase in the back extraction is recovered by electrowinning.

Subsequently, to recover nickel, the extraction residual solution obtained by solvent extraction of cobalt ions is subjected to solvent extraction, preferably using the carboxylic acid-based extracting agent to separate nickel ions. Examples of the carboxylic acid-based extracting agent include neodecanoic acid and naphthenic acid, among which neodecanoic acid is preferred due to its ability to extract Ni.

The extracting agent containing nickel ions (organic phase) after solvent extraction can be subjected to back extraction. The Ni that has moved to the aqueous phase is recovered by electrowinning.

The remaining nickel ions and the lithium ions are then extracted from the extraction residual solution obtained by solvent extraction during nickel recovery, and also back-extracted, and the extraction and back extraction operations are repeated to concentrate the lithium ions, thereby obtaining a lithium-concentrated solution. The extracting agent preferably used in the concentration of lithium include an extracting agent comprising 2-ethylhexyl phosphonate or di-2-ethylhexyl phosphate.

The lithium-concentrated solution may optionally be subjected to neutralization, followed by carbonation, to recover lithium as lithium carbonate.

The invention further relates to the following embodiments (A) to (E):
(A) A method for processing lithium ion battery scrap, the method comprising:
   a leaching step of leaching lithium ion battery scrap in an acid to obtain a leached solution containing at least fluoride ions and aluminum ions;
   a neutralization step of neutralizing the leached solution in a pH range of from 5.3 to 5.5 to remove at least a part of the aluminum ions from the leached solution to obtain a neutralized solution; and
   an extraction step of extracting the remaining of the aluminum ions from the neutralized solution by subjecting the extracted solution to solvent extraction.
(B) The method for processing lithium ion battery scrap according to embodiment (A), wherein the extraction step comprises subjecting the neutralized solution to solvent extraction using a mixed extracting agent containing a phosphate ester-based extracting agent and an oxime-based extracting agent.
(C) The method for processing lithium ion battery scrap according to embodiment (A) or (B), wherein an aluminum ion concentration in the neutralized solution is reduced to 100 mg/L or less by neutralization in the neutralization step.
(D) The method for processing lithium ion battery scrap according to any one of embodiments (A) to (C),
   wherein the leached solution further contains manganese ions and/or copper ions, and
   wherein the extraction step comprises extracting the manganese ions and/or the copper ions together with the aluminum ions from the neutralized solution.
(E) The method for processing lithium ion battery scrap according to any one of embodiments (A) to (D),
   wherein the leached solution further contains iron ions, and
   wherein the neutralization step comprises, prior to the neutralization, adding an oxidizing agent to the leached solution to adjust a pH in a range of from 3.0 to 5.0 to remove the iron ions from the leached solution.

### EXAMPLES

The method for processing lithium ion battery scrap as described above was experimentally conducted and its effects were confirmed as described below. However, the description herein is merely for the purpose of illustration and is not intended to be limited thereto.

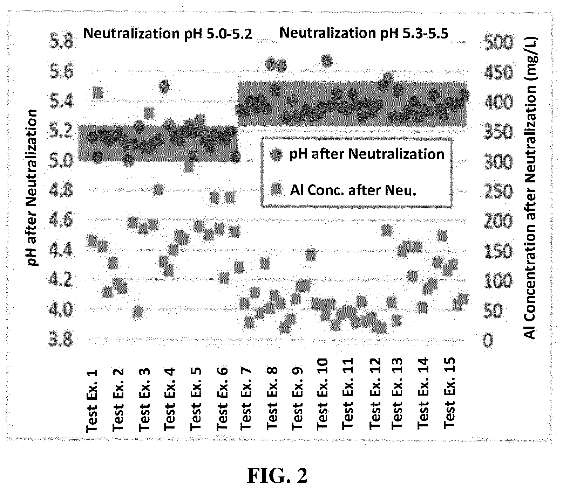

The leached solution containing fluoride ions and aluminum ions obtained from lithium ion battery scrap was subjected to the neutralization step and subsequent extraction step. Here, several tests were conducted by changing the pH during neutralization as shown in FIG. 2.

As shown in FIG. 2, when the pH during neutralization was in the range of from 5.0 to 5.2, the Al concentration in the neutralized solution was relatively high, whereas when the pH during neutralization was in the range of from 5.3 to 5.5, the Al concentration in the neutralized solution was significantly decreased to around 100 mg/L.

During the period when the pH during neutralization was in the range of from 5.0 to 5.2, there was clogging of the pipeline in about one to two months, so that the operation had to be suspended. On the other hand, after the pH was changed to the range of from 5.3 to 5.5, there was no suspended operation due to clogging. It should be noted that pH more than 5.5 is not suitable for any actual operation because of increased loss of Co.

Therefore, it was found that the aluminum ions could be removed from the leached solution to prevent clogging of the pipeline effectively.

## Claims

1. A method for processing lithium ion battery scrap, the method comprising:
a leaching step of leaching lithium ion battery scrap in an acid to obtain a leached solution containing at least fluoride ions and aluminum ions, a fluoride ion concentration in the leached solution being from 10 mg/L to 2000 mg/L and an aluminum ion concentration in the leached solution being from 100 mg/L to 10000 mg/L;
a neutralization step of neutralizing the leached solution in a pH range of from 5.3 to 5.5 to remove at least a part of the aluminum ions from the leached solution to obtain a neutralized solution; and
an extraction step of extracting the remaining of the aluminum ions from the neutralized solution by subjecting the extracted solution to solvent extraction.

2. The method for processing lithium ion battery scrap according to claim 1, wherein the fluoride ion concentration in the leached solution is from 50 mg/L to 1000 mg/L and the aluminum ion concentration in the leached solution is from 3000 mg/L to 8000 mg/L.

3. The method for processing lithium ion battery scrap according to claim 1 or 2, wherein the leached solution further contains lithium ions and a molar ratio of lithium to aluminum in the leached solution (Li/Al ratio) is 1.1 or more.

4. The method for processing lithium ion battery scrap according to any one of claims 1 to 3, wherein an aluminum ion concentration in the neutralized solution is reduced to 100 mg/L or less by neutralization in the neutralization step.

5. The method for processing lithium ion battery scrap according to any one of claims 1 to 4,
wherein the leached solution further contains manganese ions and/or copper ions, and
wherein the extraction step comprises extracting the manganese ions and/or the copper ions together with the aluminum ions from the neutralized solution.

6. The method for processing lithium ion battery scrap according to any one of claims 1 to 5,
wherein the leached solution further contains iron ions, and
wherein the neutralization step comprises, prior to the neutralization, adding an oxidizing agent to the leached solution to adjust a pH in a range of from 3.0 to 5.0 to remove the iron ions from the leached solution.
